# EUROPEAN PATENT APPLICATION

(11) **EP 4 304 080 A1**
(43) Date of publication of application: **10.01.2024**
(21) Application number: 22762891.4
(22) Date of filing: 04.02.2022
(51) Int. Cl.: H02P 27/08, H02M 7/48

(54) **INVERTER CONTROL DEVICE**

(30) Priority: 03.03.2021 JP 2021033513
(71) Applicant: DENSO CORPORATION, Kariya-city, Aichi 448-8661 (JP)
(72) Inventor: YAMADA, Tetsuya, Nisshin-city, Aichi 470-0111 (JP); KUBOTA, Masaru, Kariya-city, Aichi 448-8661 (JP)
(74) Representative: TBK
(86) International application number: PCT/JP2022/004407
(87) International publication number: WO 2022/185834

(57) **Abstract**

A control apparatus (50) for use in a rotating electrical machine system (100) equipped with a multi-phase rotating electrical machine (10) and an inverter (20) electrically connected to an armature winding (11U, 11V, 11W) installed in the rotating electrical machine. The control apparatus includes a controller (60) and a setting unit. The controller works to execute a switching control task to control switching operations of switches (SUH to SWL) for multiple phases to control an operation of the rotating electrical machine. The switches are disposed in the inverter. The setting unit executed a parameter setting task to set a time interval between the switching operations of the switches for two of the multiple phases during execution of the switching control task to be more than or equal to half a resonance cycle (TK) of voltage developed in the armature winding due to the switching operations.

## Description

### CROSS REFERENCE TO RELATED DOCUMENT

The present application claims the benefit of priority of Japanese Patent Application No. 2021-033513 filed on March 3, 2021, the disclosure of which is incorporated in its entirety herein by reference.

### Technical Field

This disclosure relates generally to a control apparatus for inverters for use with a rotating electrical machine system which includes a multi-phase rotating electrical machine and an inverter electrically connected to an armature winding installed in the rotating electrical machine.

### Background Art

The above type of control apparatus works to control on- or off-operations or switching operations of switches for multi-phases installed in the inverter to create a flow of electrical current through the armature winding to control an operation of the rotating electrical machine. The switching operations of the switches usually generates surge voltage.

In order to alleviate the surge voltage, the above publication teaches altering a parameter, such as a modulation factor (i.e., modulation percentage), in pulse-width modulation in order to bring a time interval between the switching operations for each phase out of a cycle of fluctuation of the surge voltage. This minimizes superimposition of the surge voltage onto an output voltage from the inverter for each phase.

### PRIOR ART DOCUMENT

### PATENT LITERATURE

Patent Literature 1: Japanese Patent First Publication No. 2011-108365

### SUMMARY OF THE INVENTION

A multi-phase rotating electrical machine, however, has a risk that a first surge voltage developed in a first phase circuit and a second surge voltage developed in a second phase circuit may be added to each other. A technique for alleviating such a risk is, therefore, sought.

This disclosure was made in view of the above problem. It is a principal object of this disclosure to provide a control apparatus for an inverter which is capable of reducing the surge voltage.

In order to solve the above problem, there is provided a control apparatus for an inverter. The control apparatus is used with a rotating electrical machine system which includes a multi-phase rotating electrical machine and an inverter which is electrically connected to armature windings installed in the rotating electrical machine. The control apparatus comprises: (a) a controller which works to execute a switching control task to control switching operations of switches which are used for multiple phases of the rotating electrical machine and installed in the inverter to control operation of the rotating electrical machine; and (b) a setting unit which works to, in execution of the switching control task, execute a parameter setting task to set a time interval between the switching operations of the switches for a first phase and a second phase that are two of the multiple phases of the rotating electrical machine to be more than or equal to half a resonance cycle of voltage developed at the armature windings by the switching operations of the switches.

In the rotating electrical machine system equipped with the rotating electrical machine and the inverter, the switching control task is executed for each of the switches of the inverter to control the operation of the rotating electrical machine. The switching control task is to perform the switching operations of the switches for the multiple phases. The switching operations will result in generation of surge voltage. When a time interval between the switching operations for two of the multiple phases is shortened, it may cause surge voltages, as generated in different phases, to be added to each other. When the added surge voltages become excessive, it may lead to deterioration of the rotating electrical machine.

In order to alleviate the above problem, the above structure works to set the time interval between the switching operations for two of the phases to be more than or equal to half the resonance cycle of voltage developed in the armature winding due to the switching operations of the switches. The surge voltage developed in each phase usually undergoes damped oscillation at the resonance frequency of the above voltage and has an amplitude which drops rapidly in a specific period of time until half the resonance cycle has elapsed after the surge voltage reaches a maximum value. After the specific period has elapsed, the superimposition of the surge voltages usually does not result in an undesirable voltage rise. The reduction in the superimposed surge voltages before the amplitudes of the surge voltages drop is, therefore, achieved by determining the time interval between the switching operations for two of the multiple phases to be more than or equal to half the resonance cycle.

### BRIEF DESCRIPTION OF THE DRAWINGS

The present disclosure will be understood more fully from the detailed description given hereinbelow and from the accompanying drawings of the preferred embodiments of the invention.

In the drawings:
Fig. 1 is a structural view which illustrates the whole of a rotating electrical machine system;
Fig. 2 is a transverse sectional view of a rotating electrical machine;
Fig. 3 is a view which illustrates a signal generator;
Figs. 4(A) and 4(B) are views which show a voltage command value before being altered, and a carrier signal;
Figs. 5(A) and 5(B) are views which demonstrate superimposition of surge voltages;
Fig. 6 is a flowchart which shows a sequence of steps of a parameter setting task;
Figs. 7(A) and 7(B) are views which show a voltage command value after being altered, and a carrier signal;
Figs. 8(A) and 8(B) are views which demonstrate effects of reduction in surge voltage in execution of a parameter setting task;
Fig. 9 is a view which demonstrates a period of time in which superimposition of surge voltage is inhibited in another embodiment; and
Fig. 10 is a view which illustrates a rotating electrical machine in another embodiment.

### MODE FOR CARRYING OUT THE INVENTION

The rotating electrical machine system 100 in the embodiment will be described below with reference to the drawings.

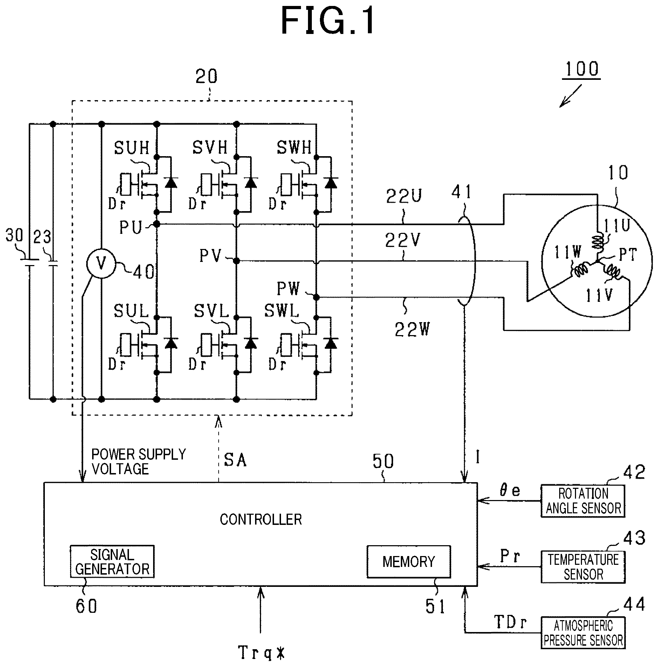

The rotating electrical machine system 100, as illustrated in Fig. 1, includes the rotating electrical machine 10 and the inverter 20. The rotating electrical machine 10 in this embodiment is designed as a brushless synchronous machine, such as a permanent magnet synchronous motor. The rotating electrical machine 10 is equipped with three-phase windings: the U-phase winding 11U, the V-phase winding 11V, and the W-phase winding 11W.

The rotating electrical machine 10 is connected through the inverter 20 to the battery 30 serving as a *dc* power source. The inverter 20 includes two series-connected units: one including upper arm switches SUH, SVH, and SWH and the other including lower arm switches SUL, SVL, and SWL. The upper and lower U-phase switches SUH and SUL are connected together at the joint PU to which a first end of the U-phase winding 11U is electrically connected through the U-phase conductor 22U. The upper and lower V-phase switch SVH and SVL are connected together at the joint PV to which a first end of the V-phase winding 11V is electrically connected through the V-phase conductor 22V. The upper and lower W-phase switches SWH and SWL are connected together at the joint PW to which a first end of the W-phase winding 11W is electrically connected through the W-phase conductor 22W. The U-phase, W-phase, and W-phase windings 11U, 11V, and 11W have second ends connected together at the neutral point PT. The conductors 22U, 22V, and 22W are made of, for example, cables or bus-bars.

In this embodiment, the switches SUH to SWL are implemented by voltage-controlled semiconductor switching devices, e.g., n-channel MOSFETs. Each of the switches SUH to SWL has a body diode built therein.

The capacitor 23 is arranged close to the battery 30 in the inverter 20 and works to smooth voltage inputted to the battery 30. The capacitor 23 has a high potential terminal connecting with a positive terminal of the battery 30 and a low potential terminal connecting with a negative terminal of the battery 30. The high potential terminal of the capacitor 23 also connect with high potential terminals, i.e., drains of the upper arm switches SUH to SWH. The low potential terminal of the capacitor 23 also connects with low potential terminals, i.e., sources of the lower arm switches SUL to SWL. The capacitor 23 may alternatively be installed in the inverter 20.

The structure of the rotating electrical machine 10 will be described below in detail. The rotating electrical machine 10 is designed as an outer-rotor surface-magnet rotating electrical machine.

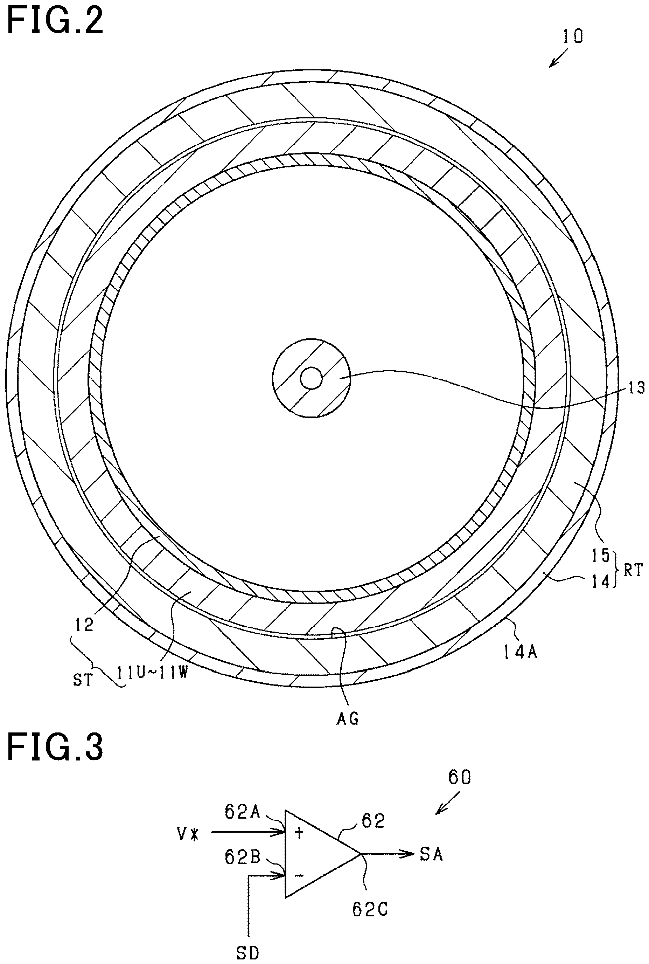

Fig. 2 is a traverse sectional view of the rotating electrical machine 10. The rotating electrical machine 10 includes the rotor RT and the stator ST. The rotor RT and the stator ST are arranged coaxially with the rotating shaft 13 which is rotatable along with the rotor RT. The rotor RT and the stator ST are assembled in a given sequence of steps to extend in an axial direction of the rotating electrical machine 10. The rotating electrical machine 10 has the rotor RT serving as a magnetic field generating unit and the stator ST serving as an armature and is configured as a revolving-field type rotating electrical machine.

Each of the rotor RT and the stator ST of the rotating electrical machine 10 is of a hollow cylindrical shape. The rotor RT and the stator ST face each other through an air gap AG. The rotation of the rotor RT along with the rotating shaft 13 causes the rotor RT which is located radially outside the stator ST to rotate.

The rotor RT includes the hollow cylindrical rotor carrier 14 and the annular magnet unit 15 secured to the rotor carrier 14. The rotor carrier 14 is fixed on the rotating shaft 13.

The rotor carrier 14 includes the cylinder 14A. The magnet unit 15 is secured to a radially inner periphery of the cylinder 14A. The magnet unit 15 is made up of a plurality of permanent magnets disposed to have magnetic polarities alternately arranged adjacent each other in a circumferential direction of the rotor RT. The magnet unit 15, thus, has the magnetic polarities, i.e., the north poles and the south poles which are arranged alternately in the circumferential direction of the magnet unit 15.

The stator ST is equipped with the U-phase, V-phase, and W-phase windings 11U, 11V, and 11W and the stator core 12.

The stator core 12 is of a hollow cylindrical shape and has the windings 11U, 11V, and 11W mounted on a radially outer periphery thereof which faces the rotor RT. The windings 11U, 11V, and 11W are arranged adjacent each other in the circumferential direction of the rotating shaft 13 on the outer peripheral surface of the stator core 12. In this embodiment, every two of the windings 11U, 11V, and 11W are disposed close to each other without insulating paper therebetween. In the following discussion, the insulating paper will be referred to as an insulating layer exhibiting electrical insulating properties.

Referring back to Fig. 1, the rotating electrical machine system 100 also includes the voltage sensor 40, the current sensor 41, the rotation angle sensor 42, the temperature sensor 43, and the atmospheric pressure sensor 44. The voltage sensor 40 works to measure a power supply voltage that is voltage developed across the terminals of the capacitor 23. The current sensor 41 measures at least two of phase currents flowing through the windings 11U, 11V, and 11W of the rotating electrical machine 10. The rotation angle sensor 42 is made of, for example, a resolver or a Hall device which measures an electrical angle of the rotor RT of the rotating electrical machine 10.

The temperature sensor 43 works to measure the temperature of the rotating electrical machine 10. Specifically, the temperature sensor 43 measures the temperature of the windings 11U, 11V, and 11W as representing the temperature of the rotating electrical machine 10. The atmospheric pressure sensor 44 works to measure ambient air pressure surrounding the rotating electrical machine 10 and the inverter 20. The outputs of the sensors 40 to 44 are inputted to the controller 50.

The controller 50 receives a value of current measured by the current sensor 41 (which will also be referred to below as detected current value I), the electrical angle *θ* measured by the rotation angle sensor 42, the temperature measured by the temperature sensor 43 (which will also be referred to below as detected temperature value *TDr),* the ambient pressure measured by the atmospheric pressure sensor 44 (which will also be referred to below as detected air pressure value *Pr),* and the torque command value *Trq** (i.e., torque degree of target) used as a command threshold value. The controller 50 calculates an angular frequency *ωe* as representing a rotating speed of the rotating electrical machine 10 as a function of the electrical angle *θe*.

When it is required to control operation of the rotating electrical machine 10, the controller 50 works to execute a switching control task using parameters inputted thereto to control the switching operations of the switches SUH to SWL of the inverter 20 to bring a controlled variable of the rotating electrical machine 10 into agreement with a command value (i.e., target value). In this embodiment, the controlled variable is a degree of torque outputted by the rotating electrical machine10. The command value is given by the torque command value *Trq** representing a target degree of the torque. Specifically, the controller 50 outputs the driving signals SA to the driver circuits Dr provided one for each of the upper and lower switches SUH to SWL to turn on the upper switches SUH to SWH and the lower switches SUL to SWL alternately through the dead time DT. Each of the driving signals SA is in the form of either an on-signal or an off-signal.

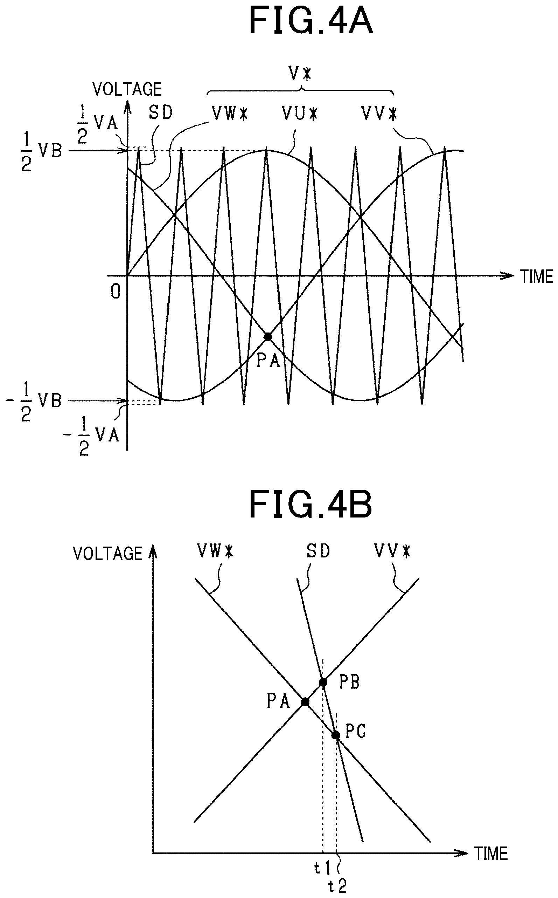

How to produce the driving signals SA will be described below with reference to Figs. 3 and 4. Fig. 3 shows a circuit structure of the signal generator 60 which produces the driving signals SA. The signal generator 60 is installed in the controller 50.

Each of the driving signals SA is created using the voltage command value V* in the form of a modulating signal and the carrier signal SD. Fig. 4(A) demonstrates the voltage command value V* and the carrier signal SD. Specifically, the signal generator 60 uses the three-phase voltage command values V* (which will also be referred to below as a voltage command value VU*, a voltage command value VV*, and a voltage command value VW* for the U-phase, the V-phase, and the W-phase). The voltage command values VU*, VV*, and VW* are 120° in electrical angle away from each other. The voltage command values VU*, VV*, and VW* use the common carrier signal SD.

The carrier signal SD used in this embodiment is in the form of a triangle wave signal with amplitude VA whose average or median is zero volts. The triangle wave signal has a maximum value and a minimum value which appear alternately. The triangle wave signal in this embodiment is shaped to have a first rate at which the voltage arises from the minimum value to the maximum value and a second rate at which voltage drops from the maximum value to the minimum value. The absolute value of the first rate is selected to be equal to that of the second rate. The carrier signal SD is higher in frequency than the voltage command value V*. The voltage command value V* in this embodiment is in the form of a sine wave signal with the amplitude VB whose average or median is zero volts. The voltage command value V* may alternatively be implemented by a sine wave on which a third-order harmonic signal is superimposed.

The signal generator 60 performs pulse-width modulation as a function of comparison in level between the voltage command value V* and the carrier signal SD to create the driving signals SA. Specifically, the comparator 62, as illustrated in Fig. 3, has the non-inverting input terminal 62A to which the voltage command value V* is inputted and the inverting input terminal 62B to which the carrier signal SD is inputted. The comparator 62 outputs from the output terminal 62C the driving signal SA in the form of an on-signal when the voltage command value V* is higher than the carrier signal SD or alternatively in the form of an off-signal when the voltage command value V* lower than the carrier signal SD. The signal generator 60 works as a controller.

The driving signal SA for each phase is inputted into a corresponding one of the driver circuits Dr provided one for each of the upper and lower switches SUH to SWL. Each of the driver circuits Dr sets the dead time DT using the driving signal SA inputted thereto and performs a switching control task to turn on a corresponding one of the upper and lower arm switches SUH to SWL. Specifically, the driver circuits Dr alternately turns on the upper and lower arm switches SUH to SWL.

In the above switching control mode, the switched states, i.e., on or off-states of the upper and lower switches SUH to SWL are changed at a time when an intersection of the voltage command value V* and the carrier signal SD appears, which may cause generation of surge voltage. When the surge voltage becomes high, so that overvoltage is applied to one of the windings 11U, 11V, and 11W of the rotating electrical machine 10, it will cause a partial discharge to occur between adjacent turns of a conductor of the one of the windings 11U, 11V, and 11W, which may lead to deterioration of the rotating electrical machine 10.

One of factors causing the elevation of surge voltage may include superimposing of surge voltages. Specifically, the V-phase voltage command value VV* and the W-phase voltage command value VW*, as demonstrated in Fig. 4(A), intersect each other at the command value intersecting point PA. Fig. 4(B) is an enlarged view of the V-phase voltage command value VV*, the W-phase voltage command value VW*, and the carrier signal SD near the command value intersecting point PA. In the example of Fig. 4(B), the carrier signal SD passes by the command value intersecting point PA. This results in a decrease in interval between time *t1* when the intersecting point PB between the V-phase voltage command value VV* and the carrier SD appears and time t2 when the intersecting point PC between the W-phase voltage command value VW** and the carrier signal SD appears, thereby leading to a decrease in time interval between the switching operations of the upper and lower U-phase switches SUH and SUL and the upper and lower V-phase switches SVH and SVL, which will cause surge voltages occurring in the V-phase and W-phase windings 11V and 11W to be superimposed on each other, so that the voltage level rises in an overlap of the surge voltages.

In order to alleviate the above problem, this embodiment works to determine a time interval between the switching operations of ones of the switches SUH to SWL for a respective two of the three phases using the cycle TK of resonance or oscillation (which will also be referred to below as resonance cycle TK) in a corresponding two of the windings 11U, 11V, and 11W.

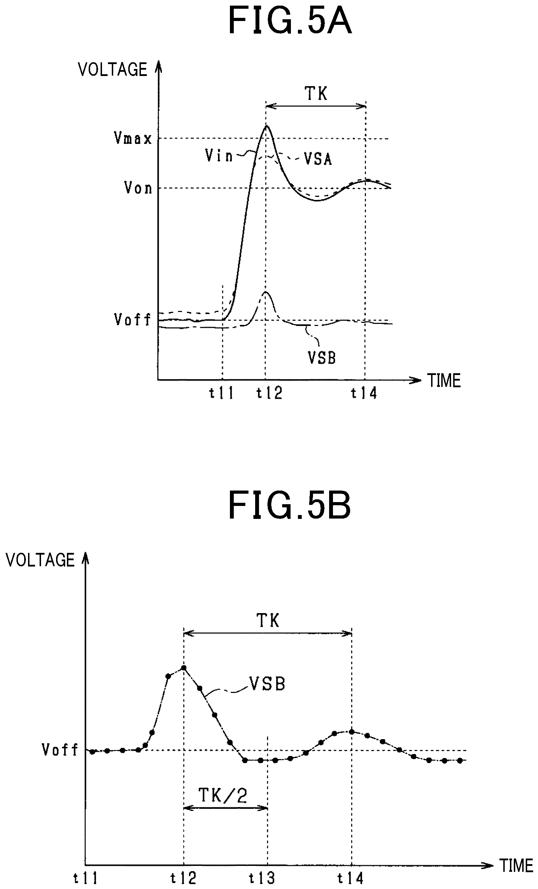

The resonance cycle TK will be described below with reference to Figs. 5(A) and 5(B). In the rotating electrical machine 10, resonance will occur in each of the windings 11U, 11V, and 11W due to an inductance or capacitance in the circuit thereof.

Fig. 5(A) demonstrates a change in input voltage Vin with time in the turn-on operations of the switches SUH to SWL (which will also be referred to below as switch turn-on operations). The input voltage Vin is voltage which is inputted from the inverter 20 to each of the windings 11U, 11V, and 11W of the rotating electrical machine 10 and changes between the on-voltage Von and the off-voltage Voff in the switching operations of the switches SUH to SWL. The on-voltage Von is given as a function of voltage developed at the positive terminal of the battery 30. For example, the on-voltage Von is defined as a value derived by subtracting a voltage drop at the upper arm switches SUH to SWH of the inverter 20 from the voltage developed at the positive terminal of the battery 30. The off-voltage Voff is given as a function of voltage developed at the negative terminal of the battery 30. For example, the off-voltage Voff is the ground voltage (i.e., zero volts).

The turn-on operation, as indicated by a solid line in Fig. 5(A), will result in appearance of surge voltage on the input voltage Vin. The surge voltage undergoes damped oscillation at the resonance frequency. Specifically, the input voltage Vin starts rising to the on-voltage Von at time *t11.* The input voltage Vin then undergoes an overshoot above the on-voltage Von and reaches a maximum value at time *t12* in one switching cycle. Afterwards, the input voltage Vin undergoes damped oscillation and converges on the on-voltage Von. If the time when the input voltage Vin first reaches a maximum value during the damped oscillation after time *t12* is referred to as time *t14,* an interval between time *t12* and time *t14* is defined as the resonance cycle TK.

In the following discussion, three phases in the rotating electrical machine 10 will also be referred to below as a first phase, a second phase, and a third phase, and three windings (i.e., the windings 11U, 11V, and 11W) of the rotating electrical machine 10 will also be referred to below as a first, a second, and a third phase winding. Fig. 5(A) shows an example where the switching operations of the switches SUH to SWL for the first and second phases are close to each other. The input voltage Vin developed at one of the first and second phase windings is indicated by a solid line. The input voltage Vin has surge voltages for two of the three phases (i.e., the first and second phases) superimposed thereon. Specifically, assuming that the input voltage Vin in the example of Fig. 5(A) is voltage inputted to the first phase winding of the rotating electrical machine 10, the input voltage Vin has the first phase surge voltage VSA indicted by a broken line, as arising from the switching operation for the first phase winding, added thereto and also has the second phase surge voltage VSB indicated by a chain line, as arising from the switching operation for the second phase winding, added thereto. When the input voltage Vin exceeds an upper limit voltage Vmax in an acceptable voltage range in the rotating electrical machine 10 due to the superimposition of the first phase surge voltage VSA and the second phase surge voltage VSB onto the input voltage Vin, it will cause a partial discharge to occur between the first and second phase windings (i.e., two of the windings 11U, 11V, and 11W), which may lead to deterioration of the rotating electrical machine 10.

Fig. 5(B) demonstrates, as an example, the second phase surge voltage VSB resulting from the switching operation for the second phase winding. If the time when the second phase surge voltage VSB has a minimum value during the damped oscillation following time *t12* is defined as time *t13,* the amplitude of the second phase surge voltage VSB drops rapidly in a specific time interval between time *t12* and time *t13,* that is, until half the resonance cycle TK expires after the second phase surge voltage VSB reaches the maximum value. The inventors of this application have focused on such a phenomenon and found how to reduce surge voltages added to the input voltage *Vin.*

Specifically, in order to achieve the above surge reduction, the rotating electrical machine system 100 determines a time interval between the switching operations of the switches SUH to SWL for two of the three phases, i.e., the first and second phases to be higher than or equal to half the resonance cycle TK, thereby minimizing a risk that the second phase surge voltage VSB and the first phase surge voltage VSA are added to the input voltage Vin in the specific time interval, that is, before the amplitudes of the surge voltages VSA and VSB drop.

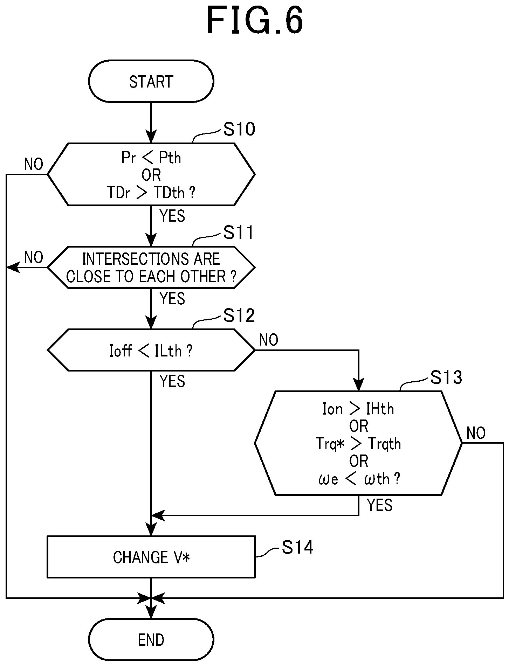

The controller 50 is designed to perform a sequence of local steps or program, as illustrated in Fig. 6. The program is executed to perform a parameter setting task in a given control cycle.

After entering the program, the routine proceeds to step S10 wherein it is determined whether a first and a second insulation conditions are both met. The first and second insulation conditions are to determine whether the dielectric strength among the U-phase winding 11U, the V-phase winding 11V, and the W-phase winding 11W of the rotating electrical machine 10 will drop. The first insulation condition is a condition where the detected air pressure value Pr is lower than the air pressure threshold value *Pth* which is selected to be, for example, lower than one atmosphere (e.g., 0.6 to 0.7 atm). The second insulation condition is a condition where the detected temperature value TDr is higher than the temperature threshold value *TDth.*

If a NO answer is obtained in step S10 meaning that at least one of the first and second insulation conditions is not met, it concludes that a condition to execute the parameter setting task is not yet satisfied. The routine then terminates.

Alternatively, if a YES answer is obtained in step S10 meaning that the first and second insulation conditions are both met, then the routine proceeds to step S11 wherein it is determined whether times when the voltage command values V* for two of the three phases, e.g., the first phase and the second phase intersect with the carrier signal SD are close to each other. Specifically, it is determined whether the intersections of the voltage command values V* for the first phase and the second phase with the carrier signal SD are close to each other, and the time interval between the switching operations of the switches SUH to SWL for the first phase and the second phase is shorter than half of the resonance cycle TK. More specifically, it is determined whether the above time interval continues to be shorter than half the resonance cycle TK for a period of time (which will also be referred to as a near-intersection period of time TN) in which a voltage difference between the voltage command values V* for two of the three phases is lower than or equal to the voltage threshold value *Vth.* The voltage threshold value *Vth* will be described later in detail.

If a NO answer is obtained in step S11, then the routine concludes that there is no need to execute the parameter setting task and terminates. Alternatively, if a YES answer is obtained in step S11, then the routine proceeds to step S12.

In step S12, it is determined whether a first drive condition is met. The first drive condition is a condition which will cause surge voltage arising from the switch turn-on operation to increase. More specifically, the first drive condition is a condition where the off-current *Ioff* that is the detected current value I measured before the switch turn-on operation starts is lower than the low current threshold value *Ilth.*

If a NO answer is obtained in step S12 meaning that the first drive condition is not met, then the routine proceeds to step S13. Alternatively, if a YES answer is obtained in step S12 meaning that the first drive condition is met, it concludes that the condition to execute the parameter setting task is satisfied.

In step S13, it is determined whether the second to fourth drive conditions are met. The second to fourth drive conditions are conditions used to determine whether a condition which will cause surge voltage arising from the switch turn-on operation to increase is satisfied. The second drive condition is a condition where the on-current *Ion* that is the detected current *I* measured before the switch turn-off operation starts is higher than the high current threshold value *IHth.* The third drive condition is a condition where the torque command value Trg* is higher than the torque threshold value *Trqth.*

The fourth drive condition is a condition where the angular frequency *ωe* is lower than the low frequency threshold value *ωth* that is a speed threshold value. The low frequency threshold value *ωth* is selected in this embodiment to be a value which enables the rotor RT of the rotating electrical machine 10 to be determined to be at rest. Usually, when the torque output of the rotating electrical machine 10 is being controlled, but the rotor RT is stopped from rotating or the rotor RT is close to being sopped, for example, due to it being locked, a large amount of current is flowing through the U-phase, V-phase, and W-phase windings 11U, 11V, and 11W.

If a NO answer is obtained in step S13 meaning that at least one of the second to fourth drive conditions is not satisfied, it concludes that the condition to execute the parameter setting task is not met. The routine then terminates. Alternatively, if a YES answer is obtained meaning that the second to fourth drive conditions are all met, it concludes that the condition to execute the parameter setting task is satisfied. The routine then proceeds to step S14.

In step S14, the voltage command values V* are changed to set the time interval between the switching operations of the switches SUH to SWL for two of the three phases to be greater than or equal to half the resonance cycle TK. The routine then terminates. The operation in step S14 constitutes to a setting unit.

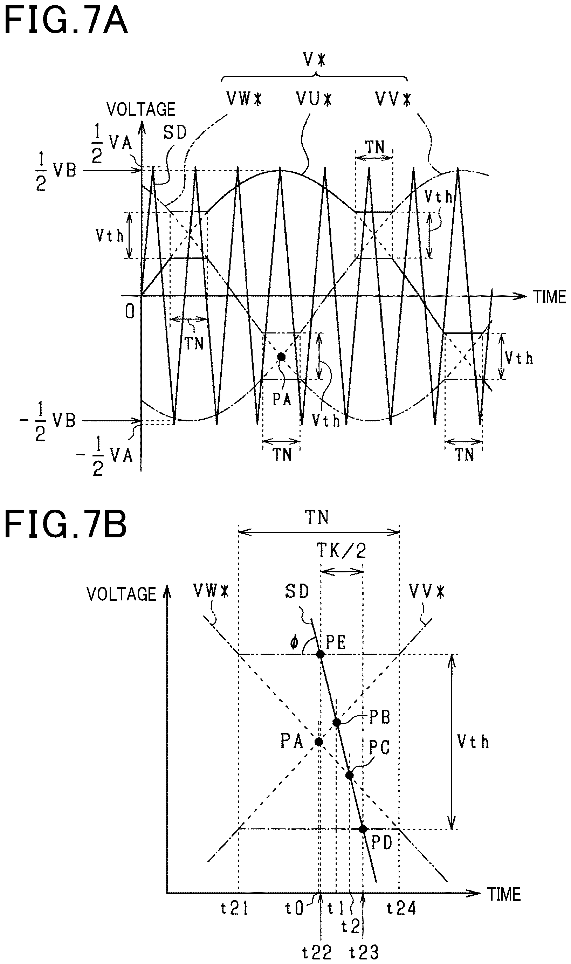

The operation in step S14 will be described with reference to Figs. 7(A) and 7(B). Fig. 7(A) represents the voltage command values V* after being changed. In order to facilitate identification of parameters, the U-phase voltage command value VU* after being changed and the carrier signal SD are indicated by solid lines. The V-phase voltage command value VV* after being changed is indicated by an alternate long and short dash line. The W-phase voltage command value VW* after being changed is indicated by an alternate long and two short dashes line. The unmodified voltage command values V* are indicated by broken lines. As can be seen from Fig. 7(A), the rotating electrical machine system 100 in this embodiment works to change a close or adjacent two of the voltage command values V* for two of the three phases, e.g., the first and second phases to set a voltage difference between the voltage command values V* for the first and second phases to be equal to the voltage threshold value *Vth* in the near-intersection period of time TN in which a voltage difference between the voltage command values V* for the first and second phases is usually lower than or equal to the voltage threshold value *Vth.*

Fig. 7(B) is an enlarged view of the V-phase voltage command value VV*, the W-phase voltage command value VW*, the W-phase voltage command value VW*, and the carrier signal SD around the command value intersecting point PA in the near-intersection period of time TN. In the example of Fig. 7(B), a voltage difference between the V-phase command value VV* and the W-phase voltage command value VW* before being changed is lower than or equal to the voltage threshold value *Vth* between time *t21* and time *t24.* The interval between time *t21* and time t24 corresponds to the near-intersection period of time TN.

In the example Fig. 7(B), the V-phase voltage command value VV* and the W-phase voltage command value VW* are altered in the near-intersection period of time TN. Specifically, each of the V-phase voltage command value VV* and the W-phase voltage command value VW* is altered to and kept at a value at time *t21* in the near-intersection period of time TN. This keeps a voltage difference between the V-phase voltage command value VV* and the W-phase voltage command value VW* at the voltage threshold value *Vth* in the near-intersection period of time TN.

The altering of the V-phase voltage command value VV* causes a crossing point between the V-phase voltage command value VV* and the carrier signal SD to be shifted from the intersection PB to the intersection PD, so that the time when the crossing point appears is changed from time *t1* to time *t25* later than time t2. Similarly, the altering of the W-phase voltage command value VW* causes a crossing point between the W-phase voltage command value VW* and the carrier signal SD to be shifted from the intersection PC to the intersection PE, so that the time when the crossing point appears is changed from time *t2* to the time *t22* earlier than time *t1.* The time interval between the crossing points between the V-phase voltage command value VV* and the carrier signal SD and between the W-phase voltage command value and the carrier signal SD is, therefore, increased to be longer than before the V-phase voltage command value VV* and the W-phase voltage command value VW* are corrected.

In this embodiment, the voltage threshold value *Vth* is, as described above, altered to set the time interval between the intersections PD and PE after the V-phase voltage command value VV* and the W-phase voltage command value VW* are corrected to be half the resonance cycle TK. Specifically, the voltage threshold value *Vth* is calculated as a function of a rate of change in carrier signal SD (i.e., *dV*/*dt*) and the resonance cycle TK, and more specifically, to be half the product of the resonance cycle TK and the rate of change in carrier signal SD. The rate of change in carrier signal SD may be determined to be an average of the rate of change in the carrier signal SD for the near-intersection period of time TN.

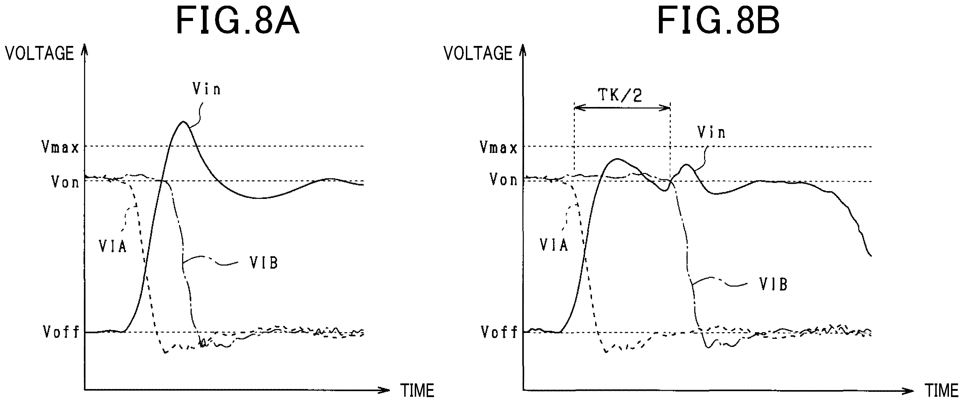

As apparent from the above discussion, the execution of the above-described parameter setting task results in a decrease in superimposed surge voltages arising from the switching operations for two of the three phases. Figs. 8(A) and 8(B) demonstrate the surge voltage, as generated in the rotating electrical machine 10 due to the terminal-to-terminal voltage VIA and VIB, added to the input voltage Vin to one (i.e., the first phase winding) of the three phase windings 11U, 11V, and 11W. The terminal-to-terminal voltage VIA and VIB are voltages appearing between the drains and sources of the switches SUH to SWL for two (i.e., the first and second phase windings) of the three phase windings 11U, 11V, and 11W. The input voltage Vin includes the first phase surge voltage VSA and the second phase surge voltage VSB superimposed thereon.

Fig. 8(A) represents a change in voltage with time before the voltage command value V* is altered in a comparative example. Fig. 8(B) represents a change in voltage with time after the voltage command value V* is altered in this embodiment. In the example of Fig. 8(B), the time interval between the switching operations of the switches SUH to SWL which correspond to the terminal-to-terminal voltages VIA and VIB is increased to be half the resonance cycle TK. This causes the addition of the second phase surge voltage VSB and the first phase surge voltage VSA developed before amplitudes thereof drop to the input voltage Vin to be reduced, thereby keeping the input voltage Vin below the upper limit voltage Vmax in the rotating electrical machine 10.

The above-described embodiment offers the following beneficial advantages.

In the rotating electrical machine 10, the switching operations of the switches SUH to SWL installed in the inverter 20, as described above, usually develop surge voltages. The rotating electrical machine system 100 in this embodiment is configured to execute the parameter setting task to set the time interval between the switching operations of the switches SUH to SWL for a respective two of the three phases to be more than or equal to half the resonance cycle TK of voltage developed at each of the phase windings 11U, 11V, and 11W of the rotating electrical machine 10 due to the switching operations of the switches SUH to SWL. The surge voltage usually undergoes damped oscillation at the resonance frequency of the above voltage and has an amplitude which drops rapidly in a specific period of time elapsed until half the resonance cycle TK expires after the surge voltage reaches a maximum value. The parameter setting task serves to reduce the addition of surge voltages, as generated in two of the three phase windings 11U, 11V, and 11W before the amplitudes thereof drop, to the input voltage Vin.

Specifically, when intersections of the voltage command values V* for two of the three phases with the carrier signal SD are close in time to each other, the parameter setting task works to alter those voltage command values V* which have been already calculated, thereby reducing the surge voltages added to the input voltage Vin. This results in a decrease in operation load on the controller 50 as compared with then the controller 50 re-calculates the voltage command value V*. The range in which the voltage command value V* is to be altered is predetermined as a function of the voltage command value V* calculated before being altered. This eliminates the need for the controller 50 to execute a feedback mode in order to determine the range in which the voltage command value V* is to be altered, thereby reducing deterioration of controllability of the controller 50 to calculate the voltage command value V* or increase in production cost of the controller 50.

Specifically, the controller 50 changes the voltage command values V* for two of the phase windings 11U, 11V, and 11V (which will also be referred to as the first voltage command value V* and the second voltage command value V*) to bring a difference between the first and second voltage command values V* into agreement with the voltage threshold value *Vth* in the near-intersection period of time TN in which the difference between the first and second voltage command values V* before being changed is less than or equal to the voltage threshold value *Vth.* The voltage threshold value *Vth* is calculated as a function of the rate of change in carrier signal SD and the resonance cycle TK. Specifically, the voltage threshold value *Vth* is determined to be half the product of the resonance cycle TK and the rate of change in carrier signal SD. In other words, the voltage threshold value *Vth* is derived depending upon the value of the carrier signal SD. This causes the voltage threshold value *Vth* to be changed with a change in carrier signal SD which results from driving conditions of the rotating electrical machine 10 to set the time interval between the switching operations of the switches SUH to SWL for two of the three phase windings 11U, 11V, and 11W to be more than or equal to half the resonance cycle TK.

When the frequency of the carrier signal SD is higher than that of the voltage command value V*, the switch turn-on operation (i.e., the switching operation) is executed in a period of time in which the carrier signal SD is decreasing from the maximum value to the minimum value. In this embodiment, when the switch turn-on operation is required to be executed, and the off current *Ioff* is determined to be lower than the low current threshold value *Ilth,* the controller 50 performs the parameter setting task. Usually, when the off current *Ioff* is lower than the low current threshold value *Ilth* in the switch turn-on operation, the surge voltage is likely to rise. The controller 50 executes the parameter setting task only in the condition where there is an increased risk that the surge voltage rises greatly, thereby achieving the reduction in surge voltage without increasing an operation load on the controller 50.

Alternatively, when the frequency of the carrier signal SD is higher than that of the voltage command value V*, the switch turn-off operation (i.e., the switching operation) is executed in a period of time in which the carrier signal SD is increasing from the minimum value to the maximum value. In this embodiment, when the switch turn-off operation is required to be executed, and the torque command value Trg* is determined to be greater than the torque threshold *Trqth,* the controller 50 performs the voltage command rate reduction task. Usually, when the turn-off operation is executed, and the torque command value Trg* is higher than the torque threshold value *Trqth,* the surge voltage is likely to rise. The controller 50 executes the parameter setting task only in the condition where there is an increased risk that the surge voltage rises greatly, thereby achieving the reduction in surge voltage without increasing an operation load on the controller 50.

When the switch turn-off operation is required to be executed, the controller 50 executes the parameter setting task when the on-current *Ion* is determined to be higher than the high current threshold value *IHth.* Usually, in the switch turn-off operation, the surge voltage is likely to rise in the condition where the on-current Ion is higher than the high current threshold value *IHth.* The controller 50 executes the parameter setting task only in the condition where there is an increased risk that the surge voltage rises greatly, thereby achieving the reduction in surge voltage without increasing an operation load on the controller 50.

When the switch turn-off operation is required to be executed, and the angular frequency *ωe* is determined to be lower than the low frequency threshold value *ωth,* the controller 50 performs the parameter setting task. Usually, in the switch turn-off operation, the surge voltage is likely to rise in the condition where the angular frequency *ωe* is lower than the low frequency threshold value *ωth.* The controller 50 executes the parameter setting task only in the condition where there is an increased risk that the surge voltage rises greatly, thereby achieving the reduction in surge voltage without increasing an operation load on the controller 50.

When the detected temperature value TDr is determined to be higher than the temperature threshold value *TDth,* the controller 50 executes the parameter setting task. Usually, when the detected temperature value TDr is higher than the temperature threshold value *TDth,* it will result in a decrease in the dielectric strength of the rotating electrical machine 10. The execution of the parameter setting task, therefore, serves to reduce an operation load on the controller 50 as well as reduction in surge voltage.

When the detected air pressure value Pr is determined to be lower than the air pressure threshold value *Pth,* the controller 50 executes the parameter setting task. Usually, when the detected air pressure value Pr is lower than the air pressure threshold value *Pth,* it will result in dielectric strength of the rotating electrical machine 10. The execution of the parameter setting task, therefore, serves to reduce an operation load on the controller 50 as well as reduction in surge voltage.

In the rotating electrical machine 10, no insulating paper is disposed between every two of the windings 11U, 11V, and 11W, thereby enabling the windings 11U, 11V, and 11W to be arranged close to each other, which leads to a reduced size of the rotating electrical machine 10. This layout of the windings 11U, 11V, and 11W usually result in a decrease in electrical insulation between an adjacent two of them, thus facilitating the superimposition of surge voltages onto the input voltage Vin, but however, the controller 50 is, as described above, designed to control the time interval between the switching operation for two of the windings 11U, 11V, and 11W to be more than or equal to half the resonance cycle TK, which minimizes the risk that undesirable high surge voltages, as generated in two of the windings 11U, 11V, and 11W, may be added to the input voltage Vin to a corresponding one of the windings 11U, 11V, and 11W.

### OTHER EMBODIMENTS

The above embodiment may be modified in the following ways.

The rotating electrical machine system 100 in the above embodiment is designed to alter the voltage command values V* used in the switching control task for two of the phase windings 11U, 11V, and 11V (i.e., the first voltage command value V* and the second voltage command value V*) after having been calculated, but however, may alternatively be configured to first calculate the first and second voltage command values V* whose difference is equal to the voltage threshold value *Vth* in the near-intersection period of time TN without altering or correcting them later. The voltage threshold value *Vth* is preferably changed as a function of the frequency of the carrier signal SD.

The controller 50 in the above embodiment works to alter the first and second voltage command values V* to set the time interval between the switching operations of the switches SUH to SWL for two of the three phase windings 11U, 11V, and 11W to be more than or equal to half the resonance cycle TK, but however, may alternatively be configured to alter the dead time DT of the inverter 20 to determine the time interval between the switching operations of the switches SUH to SWL for two of the three phase windings 11U, 11V, and 11W to be more than or equal to half the resonance cycle TK.

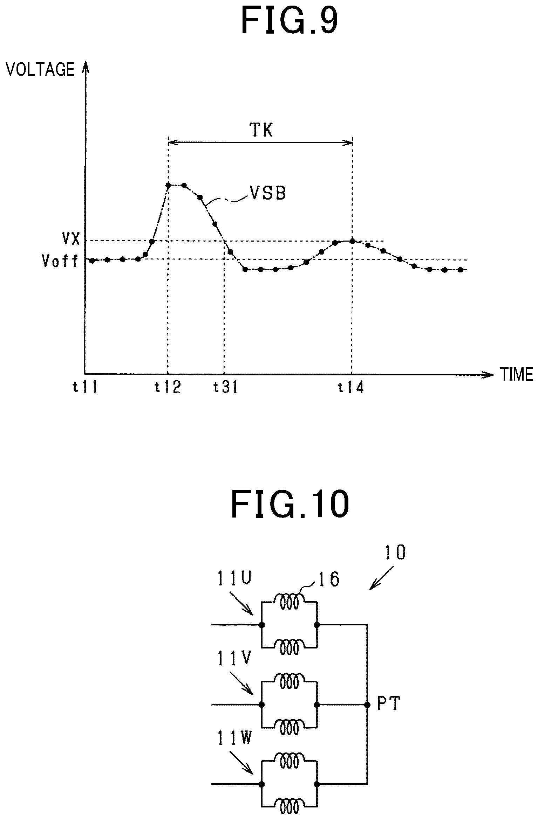

The controller 50 in the above embodiment calculates the voltage threshold value *Vth* to be half the product of the resonance cycle TK and an absolute value of the rate of change in the carrier signal SD, but however, may alternatively determine the voltage threshold value *Vth* to be more than half the product of the resonance cycle TK and the absolute value of the rate of change in the carrier signal SD. For instance, if the level of the second phase surge voltage VSB at time *t14,* as demonstrated in Fig. 9, when it reaches a maximum value thereof after time *t12* is defined as the voltage *VX,* and the time when the level of the second phase surge voltage VSB first reaches the voltage *VX* after time *t12* is defined as time *t31,* the voltage threshold value *Vth* may be determined as a function of a time interval between time *t12* and time *t31.* Specifically, the voltage threshold value *Vth* may be determined to be half the product of the length of time between time t12 and time t31 and an absolute value of the rate of change in the carrier signal SD.

In the above embodiment, the input voltage Vin is inputted from the inverter 20 to each of the phase windings 11U, 11V, and 11W of the rotating electrical machine 10, but however, it may alternatively be defined as a voltage appearing in the rotating electrical machine 10, such as a difference in potential between ends of a selected one of the phase windings 11U, 11V, and 11W.

The armature (i.e., the stator ST) in the above embodiment has an armature winding made up of the phase windings 11U, 11V, and 11W which are made of a single conductive wire 16, but however, each of the phase windings 11U, 11V, and 11W may be, as illustrated in Fig. 10, designed to include a plurality of windings which are connected in parallel to each other and each of which is made of the single conductive wire 16. This structure serves to reduce resonant oscillation in the armature winding as compared with when the phase windings 11U, 11V, and 11W are made of the single conductive wire 16.

The carrier signal SD may be in the shape of a sawtooth wave instead of the triangle wave.

The switches SUH to SWL of the inverter 20 may alternatively be implemented by IGBTs instead of the n-channel MOSFETs. In this case, each of the IGBTs has a collector in the form of a high-potential terminal and an emitter in the form of a low-potential terminal. Each of the IGBTs may have a freewheel diode connected in inverse-parallel thereto.

The inverter 20 and the rotating electrical machine 10 may alternatively be designed for two or more than three phase windings. In other words, the inverter 20 and the rotating electrical machine may be configured for multi-phase windings.

The insulating layers used in the rotating electrical machine 10 may be made of electrically insulating material, such as synthetic resin, instead of the insulating paper.

The controlled variable of the rotating electrical machine 10 may be the rotation speed instead of the degree of torque outputted from the rotating electrical machine 10.

The operations of each controller referred to in this disclosure may be realized by a special purpose computer which is equipped with a processor and a memory and programmed to execute one or a plurality of tasks created by computer-executed programs or alternatively established by a special purpose computer equipped with a processor made of one or a plurality of hardware logical circuits. The controllers or operations may alternatively be realized by a combination of an assembly of a processor with a memory which is programmed to perform one or a plurality of tasks and a processor made of one or a plurality of hardware logical circuits. Computer-executed programs may be stored as computer executed instructions in a non-transitory computer readable medium. The means for performing the functions of parts of the controller need not necessarily include software, but may be realized by one or a plurality of hardware devices.

The present disclosure has been described above on the basis of embodiments and modifications, but the embodiments of the invention described above are for facilitating the understanding of the present disclosure and do not limit the present disclosure. The present disclosure can be modified and improved without departing from the concept and the scope of the claims, and the present disclosure includes equivalents thereof.

## Claims

1. A control apparatus (50) for use with a rotating electrical machine system (100) which includes a multi-phase rotating electrical machine (10) and an inverter (20) which is electrically connected to armature windings (11U, 11V, 11W) installed in the rotating electrical machine, the control apparatus comprising:
a controller (60) which works to execute a switching control task to control switching operations of switches (SUH to SWL) which are used for multiple phases of the rotating electrical machine and installed in the inverter to control an operation of the rotating electrical machine; and
a setting unit which works to, in execution of the switching control task, execute a parameter setting task to set a time interval between the switching operations of the switches for a first phase and a second phase that are two of the multiple phases of the rotating electrical machine to be more than or equal to half a resonance cycle *(TK)* of voltage developed at the armature windings by the switching operations of the switches.

2. The control apparatus as set forth in claim 1, wherein the controller executes the switching control task using pulse-width modulation based on comparison between a modulating signal for each of the multiple phases and a carrier signal (SD), and
the setting unit works to alter a first modulating signal and a second modulating signal that are two of the modulating signals for two of the multiple phases so that a voltage difference between the first and second modulating signals is greater than or equal to a voltage threshold value *(Vth)* in a period of time *(TN)* in which the voltage difference between the first and second modulating signals before being altered is less or equal to the voltage threshold value, thereby setting the time interval to be more than or equal to half the resonance cycle.

3. The control apparatus as set forth in claim 1, wherein the controller executes the switching control task using the pulse-width modulation based on comparison between each of the modulating signals for the multiple phases and the carrier signal, and
the setting unit works to produce the modulating signal which is set to have the voltage difference between the first and second modulating signals which is higher than or equal to the voltage threshold value *(Vth),* thereby determine the time interval to be more than or equal to half the resonance cycle.

4. The control apparatus as set forth in claim 2 or 3, wherein the voltage threshold value is calculated as a function of a rate of change in the carrier signal and the resonance cycle.

5. The control apparatus as set forth in any one of claims 1 to 4, wherein when the controller is required to perform a switch turn-on operation as one of the switching operations, the setting unit executes the parameter setting task in a condition where a value of current flowing through the armature winding before the switch turn-on operation is performed is lower than a low current threshold value *(Ilth).*

6. The control apparatus as set forth in any one of claims 1 to 5, wherein the controller executes the switching control task to bring a controlled variable of the rotating electrical machine into agreement with a command value, and
when the controller is required to perform a turn-off operation as one of the switching operations, the setting unit executes the parameter setting task in a condition where the command value is higher than a command threshold value.

7. The control apparatus as set forth in any one of claims 1 to 6, wherein when the controller is required to perform a turn-off operation as one of the switching operations, the setting unit executes the parameter setting task in a condition where a value of current flowing through the armature winding before the switch turn-off operation is performed is higher than a high current threshold value (*IHth*)*.*

8. The control apparatus as set forth in any one of claims 1 to 7, wherein when the controller is required to perform a turn-off operation as one of the switching operations, the setting unit executes the parameter setting task in a condition where a speed of rotation of the rotating electrical machine is lower than a speed threshold value.

9. The control apparatus as set forth in any one of claims 1 to 8, wherein the rotating electrical machine is equipped with a temperature sensor (43) which measures a temperature of the rotating electrical machine, and
the setting unit executes the parameter setting task in a condition where the temperature measured by the temperature sensor is higher than a temperature threshold value *(TDth).*

10. The control apparatus as set forth in any one of claims 1 to 9, wherein the rotating electrical machine is equipped with an atmospheric pressure sensor (44) which measures an ambient air pressure, and
the setting unit executes the parameter setting task in a condition where the ambient air pressure measured by the atmospheric pressure sensor is lower than an air pressure threshold value *(Pth).*

11. The control apparatus as set forth in any one of claims 1 to 10, wherein the rotating electrical machine includes a magnetic field generating unit (RT) and an armature (ST), the magnetic field generating unit being equipped with a magnet unit (15) having a plurality of magnetic polarities which are arranged alternately in a circumferential direction, the armature being equipped with the armature winding,
one of the magnetic field generating unit and the armature serves as a rotor (ST),
the armature winding includes multi-phase windings which are arranged in the armature in a circumferential direction of the rotor, and
an insulating layer having an electrical insulating property is not disposed between a respective two of the muti-phase windings.
